# EUROPEAN PATENT APPLICATION

(11) **EP 3 742 329 A1**
(43) Date of publication of application: **25.11.2020**
(21) Application number: 19175446.4
(22) Date of filing: 20.05.2019
(51) Int. Cl.: G06K 9/00

(54) **LANE TRACKING IN THREE DIMENSIONS USING DIGITAL TERRAIN MODEL**

(71) Applicant: Visteon Global Technologies, Inc., Van Buren Township, MI 48111-5711 (US)
(72) Inventor: PFEIFLE, Martin, 50170 Kerpen (DE); BOCK, Hendrik, 67378 Zeiskam (DE); ZELLER, Niclas, 85764 Oberschleißheim (DE)
(74) Representative: MERH-IP Matias Erny Reichl Hoffmann Patentanwälte PartG mbB

(57) **Abstract**

A data processing system for a vehicle (V) driving on a road (R). The system may acquire image data from a camera (11), which may capture images of the road (R). The system may detect at least one lane of the road (R) in the image data. The system may extract lane parameters from the image data of the system may acquire location information about a current location of the vehicle (V). The system may acquire a digital terrain model, DTM, based on the current location of the vehicle (V). The system may correlate the extracted lane parameters with the DTM to obtain a three-dimensional model of the road (R) and/or three-dimensional location coordinates of the vehicle (V).

## Description

### TECHNICAL FIELD

One or more embodiments described herein relate to a data processing method and a data processing system for a vehicle. In particular, a method and a system are provided which apply a digital terrain model to improve lane and object tracking.

### BACKGROUND

Advanced Driver Assistance Systems (ADAS) have been proven to be effective in assisting drivers of vehicles. Hence in recent time, ADAS are being rapidly adopted in vehicles. Autonomous navigation, for example, is one desired functionality among the driver assistance functions offered by ADAS. Autonomous navigation is highly dependent on detecting the environment of the vehicle, and, in particular, autonomous navigation requires reliable and accurate lane detection as well as detection of other vehicles.

Cameras are widely used in ADAS perception systems, such as for object detection. One reason for this is the relatively low price of cameras. However, a single image captured by a camera only provides a two-dimensional representation of the three-dimensional environment of a vehicle. Mapping of the two-dimensional images into the three-dimensional space requires to make assumptions about the three-dimensional environment or three-dimensional information needs to be gathered using additional sensors, such as LiDARs, or complex algorithms, such as "Structure from Motion" (SfM). Without additional information, often, the only assumption is that the road in front of the vehicle is a planar surface which is oriented with respect to the footprint of the vehicle. However, this assumption is only true in rare cases. The assumption, for example, is incorrect when the vehicle accelerates or decelerates, such that the front of the vehicle, and thus the reference frame of the camera, is moving up or down with respect to the road surface. Thus the assumption has limited applicability.

Complex systems may include LiDAR to try to map a two-dimensional image to a three-dimensional space. Such complex systems may be cost prohibitive and may be impractical due to packaging constraints of a vehicle. The LiDAR may attempt to directly measure the terrain in front of the vehicle. However, in addition to expense and packaging constraints, LiDAR has a limited depth range, which in general is shorter than the range of camera-based lane and moving object detection systems. Therefore, the terrain model which can be obtained by a LiDAR might be incomplete or limited, such as when compared to a camera-based detection system. Moreover, LiDAR is highly dependent on weather conditions. Inclement weather, such as rain or snow, may impact the effectiveness of LiDAR. Furthermore, a LiDAR point cloud is not a single-shot measurement, but rather results from a scan over time. Hence, distortions may be present in the point cloud and have to be compensated, especially when driving at high speeds. The compensation requires computing time and resources.

A camera-based three-dimensional measurement of the static terrain surrounding the vehicle may be obtained from a sequence of images captured by a moving camera installed in a vehicle. This approach is known as "Structure from Motion" (SfM) or "Simultaneous Localization and Mapping" (SLAM). The SfM approach involves solving a high-dimensional nonlinear optimization problem and hence is computationally highly demanding. While some functionalities (e.g. searching and tracking of interest points) can be implemented in parallel, the nonlinear optimization problem has to be solved incrementally and therefore requires a serial implantation. Depth information is obtained only based on the motion of the camera. Hence, the recorded scene needs to be static. The term static has to be considered in a photometric sense which also includes light sources. This makes the SfM problem difficult to solve, particularly, at night where multiple moving light sources are present. Furthermore, since a camera is a passive sensor, measurements are obtained from (structures, such as horizontal structures, in the scene. When such structures are not present in the scene, measurements may be unattainable.

### BRIEF SUMMARY OF THE INVENTION

Aspects of the present application are directed at providing a data processing method and a data processing system for a vehicle. In particular, data processing methods described below may be implemented by a data processing system as described below.

According to an aspect, a data processing method for a vehicle driving on a road may comprise a step of acquiring image data from at least one camera which is capturing images of the environment of the vehicle, particularly the road that the vehicle is currently driving on. According to another aspect, the camera may be capturing a sequence of consecutive image of a road, the images therefore are forming a time-series of images. According to an aspect, a camera unit of the vehicle may comprise one or more cameras which may be used for capturing images of the environment of the vehicle, for example, one or more front facing perspective cameras and/or one or more side-facing fisheye cameras.

According to an aspect, the method may comprise a step of detecting at least one lane of the road in the image data provided by the at least one camera and extracting lane parameters of the at least one lane. In particular, a lane of a road may be detected by image recognition methods detecting road surface markings and/or other visual markers defining lanes on a road. For example, lane detection may be carried out using an (extended) Kalman filter. According to another aspect, the lane detection may be carried out using neural networks which have been trained for detecting lanes in the image data.

According to another aspect, steps related to lane detection and steps related to lane estimation (i.e. lane tracking) may be considered as separate aspects. While lane detection usually refers to the classification of image pixels showing points corresponding to a lane, the lane estimation is the calculation of a parametric lane model and tracking those lanes over time, using a Kalman filter variant.

According to an aspect, the method may comprise a step of acquiring location information about a current location of the vehicle. For example, location information may be obtained from a global navigation satellite system (GNSS) such as GPS and/or from an inertial measurement unit (IMU) and/or from an inertial navigation system (INS). In the following description, a sensor unit acquiring location information from a GNSS and/or from an IMU will be referred to as an IMU/GPS unit. Typically, the obtained location information has an accuracy on the order of one or more meters up to about ten to fifteen meters.

According to an aspect, the method may comprise a step of acquiring a digital terrain model (DTM) based on the location information. Here, the term DTM may also refer to a digital elevation model (DEM) and/or a digital surface model (DSM). In particular, the DTM provides elevation data which may be combined with a high-definition (HD) map storing information about roads including lane parameters.

According to an aspect, the method may comprise a step of correlating the extracted lane parameters with the DTM to obtain a three-dimensional model of the road and/or three-dimensional location coordinates of the vehicle. This step of correlating the lane parameters with the DTM may be carried out in a similar way as fusing data obtained from different sensors of the vehicle. In other words, sensor fusing algorithms may be applied, wherein the DTM is handled in a similar way as input sensor data.

According to an aspect, the method may comprise a step of acquiring heading information about a current heading of the vehicle. For example, the heading information may be acquired by an IMU/GPS unit. The heading information may comprise at least one of a pitch, a roll, a yaw, and/or a compass direction of the vehicle.

According to an aspect the heading information may be used for correlating the extracted lane parameters with the DTM. In particular, the heading information may be used to correlate a direction of a detected lane with a direction of lanes comprised in a DTM and/or an HD map. By correlating the direction of lanes, it may be achieved to correctly identify a precise location of the vehicle within a DTM and/or on an HD map.

According to an aspect, the method may comprise a step of acquiring LiDAR data comprising three-dimensional terrain information. The LiDAR data may be obtained by using at least one LiDAR sensor of the vehicle which scans an environment of the vehicle, in particular in a forward direction.

According to an aspect, the method may comprise a step of fusing the three-dimensional terrain information with the DTM and/or with the camera image data. For fusing three-dimensional terrain information obtained by LiDAR measurements with a DTM, methods applying known sensor fusing algorithms may be applied. The three-dimensional terrain information obtained by LiDAR measurements may be affected by a limited range of the LiDAR sensor. Furthermore, objects, such as other vehicles, may shadow areas of the terrain. Thus, the terrain information provided by the DTM may be used to complement the three-dimensional terrain information obtained by LiDAR measurements.

According to an aspect, the method may comprise a step of acquiring radar data of at least one object on the road in front of the vehicle. The radar data may be obtained from a radar unit configured to emit electromagnetic waves and detect a reflection thereof. The at least one object may be at least one other vehicle driving on the road or structures such as buildings next to the road and/or bridges crossing the road. Furthermore, objects having dedicated retroreflectors for radar waves may be detected and tracked.

According to an aspect, the radar data may comprise distance information and azimuth information of the at least one object with respect to the vehicle. Distance and azimuth information may be measured with respect to a vehicle-based coordinate system. For example, the azimuth may be the angle between an axis defined by the forward-facing direction of the vehicle and a vector from the radar transmitter to the target measured in a horizontal plane. The vehicle-based coordinate system may have its origin located at the radar transmitter or another reference point, for example the center of the rear axle of the vehicle.

According to an aspect, the method may comprise a step of generating three-dimensional position information for the at least one object by correlating the radar data of the at least one object with the DTM and/or the three-dimensional model of the road. The radar data may comprise distance information and azimuth information of the at least one object. However, the radar data usually does not comprise any elevation information (i.e. altitude with respect to the vehicle). If altitude of the object is not taken into account, the object may be projected onto a planar surface in front of the vehicle. In a case where the road is not planar, a wrong assumption of the object's real location may result. However, by using the DTM and a three-dimensional location of the vehicle, the known elevation structure of the terrain (including the road) in front of the vehicle may be used to project the object into image space and obtain a three-dimensional position of the object with respect to the vehicle's coordinate system.

According to an aspect, the DTM may be obtained from a from a high-definition (HD) map. In particular, the HD map may be provided as a three-dimensional map storing at least road and lane information together with an elevation model of the terrain. The DTM and/or the HD map may be stored by a database located in the vehicle or at a server.

According to an aspect, the steps of detecting at least one lane of the road, extracting lane parameters, and/or correlating the extracted lane parameters with the DTM may be performed by a data processing unit located in the vehicle and/or a server in a distributed manner.

According to an aspect, the DTM may be provided as a parametric representation along a centerline of the road, wherein predefined regions of the road may be described as planar pieces defined by a surface normal vector and an altitude.

According to an aspect, the steps related to correlating of the extracted lane parameters or the correlation of the extracted lane parameters with the DTM may be supported by fusing the extracted lane parameters with lane parameters provided by a high definition map.

According to an aspect, a data processing system for a vehicle driving on a road may comprise a camera unit for capturing images of the road and providing image data. According to an aspect, the camera unit may comprise at least one or more cameras for capturing images of the environment of the vehicle, for example, one or more front facing perspective cameras and/or one or more side-facing fisheye cameras.

According to an aspect, the data processing system may comprise an IMU/GPS unit for providing location information about a current location of the vehicle. For example, the IMU/GPS unit may receive location coordinates of the vehicle from a global navigation satellite system (GNSS) such as GPS. Furthermore, the IMU/GPS unit may derive location information about the current location by inertial measurement which may be calibrated using GPS coordinates, In particular, the location information may be derived from inertial measurement when current GPS coordinates are not available, for example in a case when reception of GPS signals is poor or unavailable. Typically, the obtained location information may have an accuracy on the order of one or more meters up to about ten to fifteen meters.

According to an aspect, the data processing system may comprise a data processing unit located in the vehicle and/or a server. In particular, a processing unit located in the vehicle and a server may provide processing functions in a distributed manner. According to an aspect, the data processing unit and/or the server may provide a database for storing a DTM and/or an HD map.

According to an aspect, the data processing unit and/or the server may provide a localization unit configured for providing a DTM based on the location information.

According to an aspect, the data processing unit and/or the server may provide a lane detection unit configured for detecting at least one lane of the road in the image data and extracting lane parameters. Furthermore, the lane detection unit may be configured for correlating the extracted lane parameters with the DTM to obtain a three-dimensional model of the road and/or three-dimensional location coordinates of the vehicle.

According to an aspect, the IMU/GPS unit may be configured for providing heading information about a current heading of the vehicle. The heading information may comprise at least one of a pitch, a roll, a yaw, and/or a compass direction of the vehicle.

According to an aspect, the lane detection unit may be configured for correlating the extracted lane parameters with the DTM based on the heading information, as the heading of the vehicle usually coincides with the direction of the road the vehicle is currently driving on. In particular, the lane detection unit may use the heading information to correlate a direction of a detected lane with a direction of lanes comprised in a DTM and/or an HD map. By correlating the direction of lanes, it may be achieved to correctly identify a precise location of the vehicle within a DTM and/or on an HD map.

According to an aspect, the data processing system may further comprise a LiDAR unit for acquiring LiDAR data comprising three-dimensional terrain information. According to an aspect, the LiDAR unit may comprises at least one laser source for illuminating the vehicle's environment, in particular in a forward direction of the vehicle towards the road in front of the vehicle, with pulsed laser light. The reflected pulses are measured by a sensor which generates LiDAR data. Differences in laser return times and wavelengths may then be used to obtain three-dimensional terrain information.

According to an aspect, the lane detection unit may be configured for fusing the three-dimensional terrain information with the DTM. By fusing three-dimensional terrain information from a LiDAR with a DTM, range limitations of the LiDAR may be overcome. Thus, terrain information provided by the DTM can be used for regions which are not observed by the LiDAR, for example regions which lie outside the LiDAR's range or field of view, regions which are shadowed by (moving) objects, such as other vehicles, and other regions which are not observable by sensors of the vehicle.

According to an aspect, the data processing system may further comprise a radar unit configured for acquiring radar data of at least one object on the road in front of the vehicle. According to an aspect, the radar unit may be configured to emit electromagnetic waves and detect reflections thereof from at least one object. The at least one object may be at least one other vehicle driving on the road, in particular in front of the vehicle, or structures such as buildings next to the road and/or bridges crossing the road. Furthermore, objects having dedicated retroreflectors for radar waves may be detected and tracked. As described above, the radar data may comprise distance information and azimuth information of the at least one object, wherein distance and azimuth may be measured with respect to the vehicle.

According to an aspect, the data processing system may further comprise an object detection unit configured for generating three-dimensional position information for the at least one object by correlating the radar data of the at least one object with the DTM and/or the three-dimensional model of the road.

According to an aspect, the data processing system or the data processing unit according to one or more aspects described herein may be configured to implement at least one step or all steps of a method according to aspects described in this application.

According to an aspect, the data processing unit may be comprised in an Advanced Driver Assistance Systems (ADAS) of the vehicle. Thus, by using the DTM to map three-dimensional information onto camera images, the performance of the ADAS may be improved. In particular, the performance of ADAS perception systems may be improved.

According to another aspect, fusing of the camera data with the DTM may achieve an improved camera-based odometry estimation. In other words, a visual odometry may be implemented. In general, an estimation of the motion of the vehicle based on two-dimensional images may result in an optimization problem, which may be difficult to solve due to small stereo baselines because the motion of the vehicle mainly occurs in a single (frontal) direction. Furthermore, there may be an insufficient number of reliable interest points suitable for odometry estimation. Moreover, an inaccurate camera calibration may lead to systematic estimation errors. Another problem may arise due to photometric inconsistencies caused by changing lighting conditions and moving light sources. A geometric inconsistency may be caused by moving objects causing motion blur and other negative effects. To solve these problems, the DTM can be used as an additional constraint in the optimization problem. Instead of estimating the three-dimensional structure of the road and the motion of the vehicle in a joint optimization, the three-dimensional structure may be obtained from or at least supported by the DTM.

### BRIEF DESCRIPTION OF THE DRAWINGS

Fig. 1 shows an example of a data processing system.
Fig. 2 illustrates an exemplary application of a data processing system for detecting and tracking of lanes.
Fig. 3 illustrates another exemplary application of a data processing system for detecting and tracking of lanes.
Fig. 4 illustrates another exemplary application of a data processing system for detecting and tracking of lanes and objects.
Fig. 5 illustrates an exemplary configuration of a data processing system.
Fig. 6 illustrates an exemplary process flow of a data processing method.

### DETAILED DESCRIPTION OF THE INVENTION

In the present disclosure, the expression "the vehicle" generally refers to the ego-vehicle, whereas vehicles other than the ego-vehicle are described as "objects" or referred to as "another vehicle" or "other vehicles". The ego-vehicle is also denoted by reference sign "V". Other vehicles or objects may be denoted by reference sign "O."

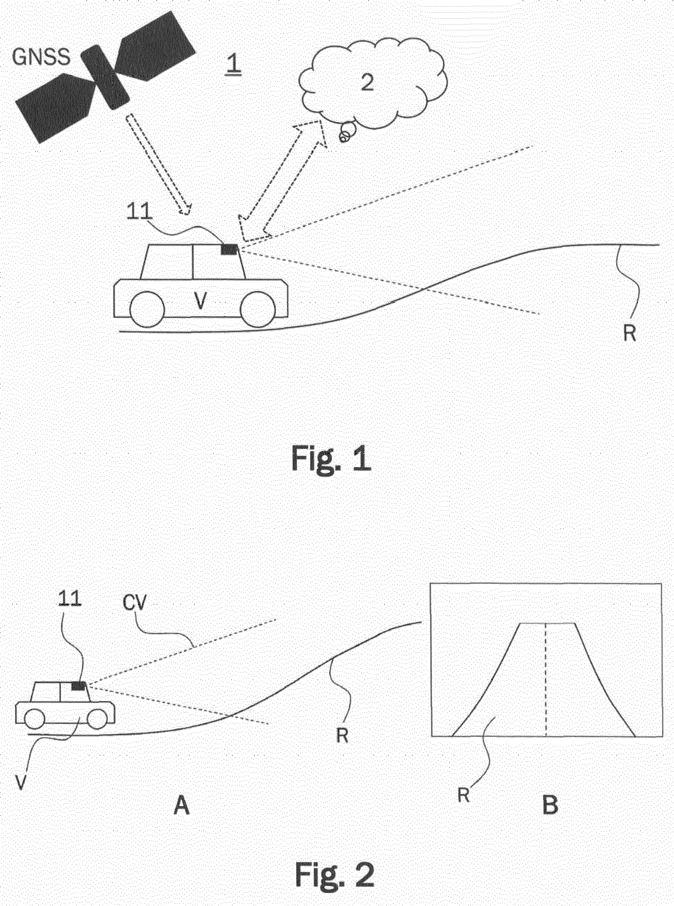

In the following, an embodiment of a data processing system 1 for a vehicle will be described. Fig. 1 shows a schematic illustration of a vehicle V driving on a road R. The vehicle comprises a camera unit 11 capturing images of the road R. The field of view of the camera is indicated by the dashed lines originating from the camera unit 11. In this exemplary embodiment, the camera unit 11 consists of a single forward-facing camera. In other embodiments, the camera unit 11 may comprise other and/or additional cameras, for example side-facing cameras, at least one stereo-camera, etc.

In the illustration of Fig. 1, the camera unit 11 is arranged behind a windscreen of the vehicle V. It is understood that the camera unit 11 may be arranged at other suitable locations of the vehicle, for example at a front of the vehicle, such as in an area next to the headlights.

The vehicle 1 may comprise an IMU/GPS unit (not illustrated) which receives location information from a global navigation satellite system GNSS. Furthermore, the vehicle may comprise a communication unit (not illustrated) for sending and/or receiving data to and/or from a server 2. The server 2 may provide data processing services and/or a database 24. The database 24 of the server 2 may store a high definition (HD) map and or a digital terrain model (DTM).

Fig. 2 illustrates an exemplary application of the data processing system 1. Fig. 2A shows a vehicle V driving on a road R having an ascending section of road lying ahead of the vehicle. The field of view CV of the camera unit 11 is indicated by the dashed lines. Fig. 2B illustrates an image of the road R provided by the camera unit 11. Based on the camera image alone, it is difficult to infer terrain information. Usually, the terrain is assumed to be flat. This can result in an incorrect detection of lanes. The road R shown in Fig. 2B has two lanes which are defined by road surface markings. Lane detection, i.e. tracking (or filtering), of traffic lanes is generally carried out using a Kalman filter, for example an extended Kalman filter. In order to improve lane detection, lanes may be tracked over time. In other words, a sequence of images provided by the camera unit 11 is used to detect and track lanes. When applying the filtering, lanes detected in image space need to be projected from image coordinates to three-dimensional vehicle coordinates, in order to obtain a representation of the lanes which can be used by the vehicle's ADAS.

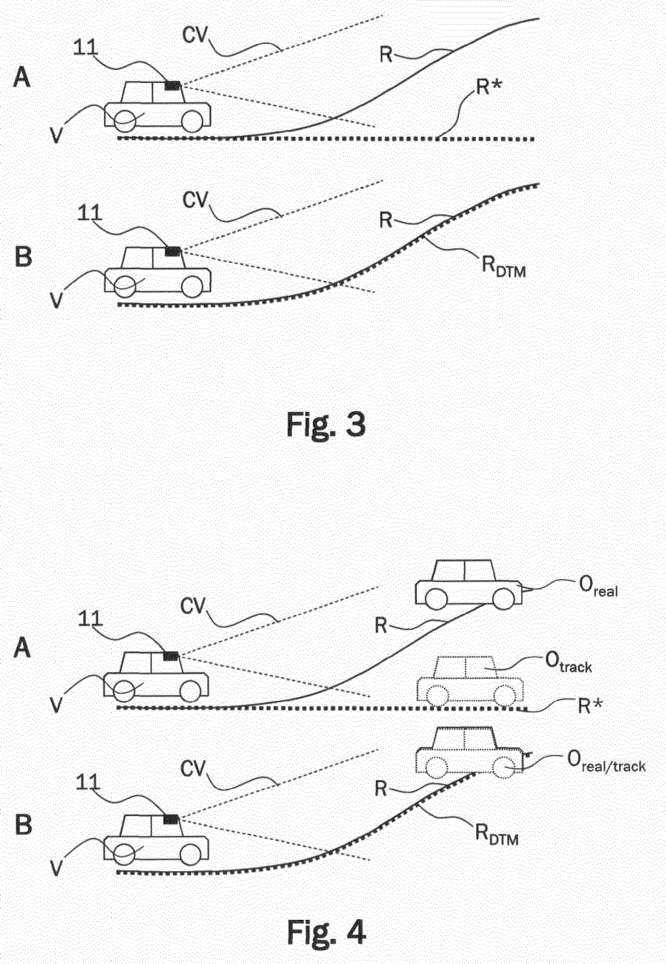

Fig. 3A illustrates a lane detection method in which the road R in front of the vehicle is assumed to be planar (dotted line R*). If this assumption is violated (as shown in the example of Fig. 3, where the road has a slope), lane pixels detected in the camera images will be projected onto incorrect locations in the three-dimensional vehicle space (i.e. three-dimensional coordinates measured with respect to a vehicle-based coordinate system).

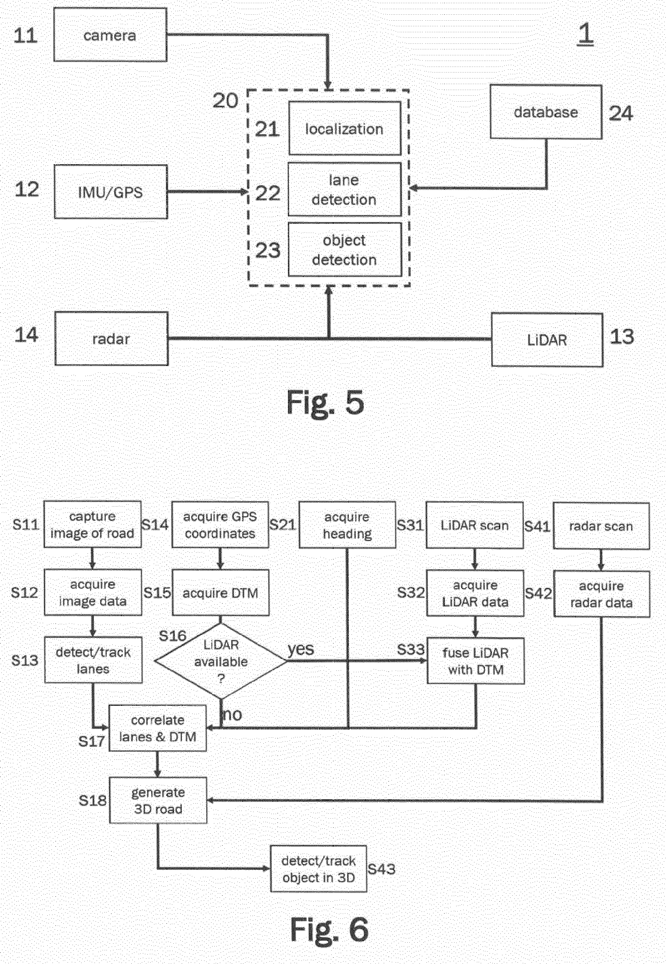

Fig. 3B illustrates a lane detection method using a DTM. The DTM can be acquired based on the location of the vehicle V, which may be obtained using GNSS coordinated provided by an IMU/GPS unit (not illustrated). The DTM provides elevation information of the terrain surrounding the vehicle V, or at least the terrain in front of the vehicle, for example when taking into account heading information. Using the DTM, lane pixels detected in the camera images may be projected onto three-dimensional coordinates in the three-dimensional vehicle space. Thus, using the DTM information, lanes can be tracked and filtered in three-dimensional space. The tracked and filtered lane coordinates obtained using the DTM are illustrated by the dotted line labelled R_{DTM} in Fig. 3B. The process of tracking/filtering lanes in three-dimensional space may be carried out by a lane detection unit 22 described with reference to Fig. 5.

Similarly to the detection and tracking of lanes, also the detection and tracking of objects may be improved by using a DTM, Fig. 4A illustrates an object detection method in which the road R in front of the vehicle is assumed to be planar (dotted line R*). The detection of objects O such as other vehicles may be assisted by using a radar. The radar data reflected by the object may be used to measure a distance and an azimuth of the object with respect to the vehicle V. Elevation information is usually not provided by radar. Thus, considering the object to be on a planar surface in front of the vehicle, the object will be projected onto a wrong location in three-dimensional space (dotted car O_{track}).

Fig. 4B illustrates an object detection method using DTM. Using the DTM based on the location of the vehicle V, the known terrain in front of the vehicle may be used to project a tracked object onto the three-dimensional space, thus obtaining a tracked position O_{track} of the object which coincides with the real position of the object Oᵣₑₐₗ. The process of tracking/filtering lanes in three-dimensional space may be carried out by an object detection unit 23 described with reference to Fig. 5.

The steps described with reference to Figs. 4A and 4B may also be carried out in another order. The tracked object may be projected into image space, and therefore, if the DTM information is not available, the object may be projected to a wrong location. This may result in an error when associating a camera position with estimated tracks based on object detection.

An exemplary configuration of a data processing system 1 for a vehicle V is illustrated in Fig. 5. The data processing system 1 comprises a camera unit 11, an IMU/GPS unit 12, a LiDAR unit 13, and a radar unit 14. Furthermore, a data processing unit 20 of the data processing system 1 comprises a localization unit 21, a lane detection unit 22, and an object detection unit 23. All or some functions of the data processing unit 20 may be provided by the vehicle V and/or a geographically distanced server 2. The data processing system 1 further comprises a database 24 which may be provided at the vehicle V and/or at the server 2. Data transfer between the vehicle V and the server 2 can be achieved using a network and corresponding network adapters (not illustrated).

The camera unit 11 comprises at least one camera, for example, one or more front facing perspective cameras and/or one or more side-facing fisheye cameras. The at least one camera is configured for capturing images of the environment of the vehicle, particularly the road R that the vehicle V is currently driving on. The at least one camera may be configured for capturing a sequence of consecutive image of a road, the images therefore forming a time-series of images. The camera unit 11 provides the image data to the data processing unit 20.

The IMU/GPS unit 12 is configured for obtaining location information, for example from a global navigation satellite system (GNSS) such as GPS. Furthermore, location information may be obtained from an inertial measurement unit (IMU). In particular, the IMU allows the IMU/GPS unit 12 to provide a location when signals from the GNSS are insufficient, such as in tunnels, in valleys, or when electronic interference is present. Typically, the location information has an accuracy on the order of one or more meters. The IMU/GPS unit 12 may be configured for further providing heading information about a current heading of the vehicle V. The heading information may comprise at least one of a pitch, a roll, a yaw, and/or a compass direction of the vehicle V. The IMU/GPS unit 12 provides the location information and the heading information of the vehicle V to the data processing unit 20.

The LiDAR unit 13 comprises at least one LiDAR sensor for scanning the environment of the vehicle V, in particular in a forward direction, and acquiring LiDAR data comprising three-dimensional terrain information. The LiDAR unit 13 provides the LiDAR data to the data processing unit 20.

The radar unit 14 is configured for emitting electromagnetic waves and detecting reflections thereof in order to detect radar data O_{track} of objects such as at least one other vehicle O driving on the road R in front of the vehicle V or structures such as buildings next to the road R and/or bridges crossing the road R. The radar data may comprise distance information and azimuth information of the object O reflecting the radar data. Distance and azimuth information may be measured with respect to a vehicle-based coordinate system. The radar unit 14 provides the radar data to the data processing unit 20.

The data processing unit 20 may comprise at least one central processing unit (CPU) and at least one memory unit (both not illustrated) having random access memory (RAM) and read-only memory (ROM). The data processing unit 20 provides functions of the localization unit 21, the lane detection unit 22, and the object detection unit 23. The functions of the data processing unit 20 and the database 24 may be provided locally at the vehicle V and/or by a geographically distant server 2 in a distributed manner. For example, the functions of the localization unit 21, the lane detection unit 22, and the object detection unit 23 may be provided as software functions implemented in a CPU.

The localization unit 21 is configured for acquiring location information about a current location of the vehicle V from the IMU/GPS unit 12. Furthermore, the localization unit may acquire image data from the camera unit 11. Moreover, the localization unit 21 may acquire a DTM and/or an HD map from the database 24.

The lane detection unit 22 is configured for detecting at least one lane of the road R in the image data provided by the camera unit 11. Furthermore, the lane detection unit 22 extracts lane parameters describing the at least one detected lane of the road R. Moreover, by correlating the extracted lane parameters with the DTM provided by the database 24 or the localization unit 21, the lane detection unit 22 obtains a three-dimensional model of the road R and/or three-dimensional location coordinates of the vehicle V. The lane detection unit 22 may also use the heading information provided by the IMU/GPS unit 12 for correlating the extracted lane parameters with the DTM.

When three-dimensional terrain information is available from the LiDAR unit 13, the lane detection unit 22 may correlate and/or fuse the three-dimensional terrain information with the DTM. When fusing the three-dimensional terrain information with the DTM, the DTM can be used to complement the three-dimensional terrain information from the LiDAR unit 13.

The object detection unit 23 acquires the radar data from the radar unit 14 and generates three-dimensional position information Oᵣₑₐₗ for the at least one object O by correlating the radar data of the at least one object 0 with the DTM and/or the three-dimensional model of the road R.

Fig. 6 shows a flow diagram illustrating a data processing method for a vehicle V driving on a road R according to aspects described herein. In a step S11, the camera unit 11 described above captures at least one image of the road R. In particular, the camera unit 11 may periodically capture images of the road R in order to obtain a time series of images of the road R. At step S12, the data processing unit 20 described above acquires the image data from the camera unit 11. In step S13 the lane detection unit 22 detects at least one lane of the road R in the image data and extracts lane parameters describing the at least one lane.

At step S14 the localization unit 21 acquires the current location of the vehicle V as GPS coordinates from the IMU/GPS unit 12. Based on the current location of the vehicle 12, the data processing unit 20 acquires a DTM in step S15 from the database 24. Furthermore, at step S21 the localization unit 21 may acquire the current heading from the IMU/GPS unit 12.

At step S16, the method checks whether or not LiDAR data is available from a LiDAR unit 13. If no LiDAR data is available and/or if the vehicle V does not comprise a LiDAR unit 13 (no in S16), the method continues without LiDAR data with step S17. If LiDAR data is available (yes in S16), the acquired DTM may be fused with three-dimensional terrain information provided by the LiDAR data.

If the vehicle V comprises a LiDAR unit 13, the LiDAR unit 13 may scan the vehicle's environment in step S31. The scanning of the vehicle's environment, in particular of the road R in front of the vehicle V may be carried out continuously. In step S32 the LiDAR data comprising three-dimensional terrain information is acquired by the processing unit 20 from the LiDAR unit 13. In step S33 the lane detection unit 22 fuses the three-dimensional terrain information with the DTM acquired in S15.

In step S17 the lane detection unit 22 correlates the extracted lane parameters obtained in S13 with the DTM. In step S18 the lane detection unit 22 applies the three-dimensional information of the DTM with the detected lanes in order to generate a three-dimensional model of the road R such that a three-dimensional location of the vehicle V can be obtained. As a result, the data processing unit 20 can provide three-dimensional information of the vehicle's location with respect to a three-dimensional representation of the road R imaged by the camera unit 11.

Furthermore, other vehicles may be detected in three dimensions using radar data provided by a radar unit 14 in conjunction with the DTM. In step S41 a radar scan is performed by the radar unit 14 and radar data is acquired in step S42. The radar data comprises a distance and an azimuth of an object O such as another vehicle driving on the road R in front of the vehicle V. In step S43 the object detection unit 23 generates three-dimensional position information Oᵣₑₐₗ for the object 0 by correlating the radar data of the object O with the three-dimensional model of the road R.

The features described in herein can be relevant to one or more embodiments in any combination. The reference numerals in the claims have merely been introduced to facilitate reading of the claims. They are by no means meant to be limiting.

Throughout this specification various embodiments have been discussed. However, it should be understood that the invention is not limited to any one of these. It is therefore intended that the foregoing detailed description be regarded as illustrative rather than limiting.

## Claims

1. A data processing method for a vehicle (V) driving on a road (R), the method comprising:
acquiring image data from a camera (11) capturing images of the road (R);
detecting at least one lane of the road (R) in the image data and extracting lane parameters;
acquiring location information about a current location of the vehicle (V);
acquiring a digital terrain model, DTM, based on the location information; and
correlating the extracted lane parameters with the DTM to obtain a three-dimensional model of the road (R) and/or three-dimensional location coordinates of the vehicle (V).

2. The data processing method according to claim 1, wherein the location information is obtained from a global navigation satellite system, GNSS, and/or from an inertial navigation system, INS.

3. The data processing method according to claim 1 or 2, further comprising:
acquiring heading information about a current heading of the vehicle (V),
wherein the heading information is used for correlating the extracted lane parameters with the DTM.

4. The data processing method according to at least one of the preceding claims, further comprising:
acquiring LiDAR data comprising three-dimensional terrain information;
fusing the three-dimensional terrain information with the DTM.

5. The data processing method according to at least one of the preceding claims, further comprising:
acquiring radar data (O_{track}) of at least one object (O) on the road (R) in front of the vehicle (V), the radar data (O_{track}) comprising distance information and azimuth information of the at least one object (0) with respect to the vehicle (V); and
generating three-dimensional position information (Oᵣₑₐₗ) for the at least one object (0) by correlating the radar data of the at least one object (O) with the DTM and/or the three-dimensional model of the road (R).

6. The data processing method according to at least one of the preceding claims, wherein the DTM is obtained from a high-definition map.

7. The data processing method according to at least one of the preceding claims, wherein the steps of detecting at least one lane of the road (R), extracting lane parameters, and/or correlating the extracted lane parameters with the DTM are performed by a data processing unit (20) located in the vehicle and/or a server (2) in a distributed manner.

8. The data processing method according to at least one of the preceding claims, wherein the DTM is provided as a parametric representation along the centerline of the road (R), wherein pieces of the road (R) are described as planar pieces defined by a surface normal vector and an altitude.

9. The data processing method according to at least one of the preceding claims, wherein the correlating of the extracted lane parameters with the DTM is supported by fusing the extracted lane parameters with lane parameters provided by a high definition map.

10. A data processing system (1) for a vehicle (V) driving on a road (R), the system (10) comprising:
a camera unit (11) for capturing images of the road (R) and providing image data;
an IMU/GPS unit (12) for providing location information about a current location of the vehicle (V);
a database (24) for storing a digital terrain model, DTM; and
a data processing unit (20) located in the vehicle (V) and/or a server (2) for providing:
a localization unit (21) configured for providing a DTM, based on the location information; and
a lane detection unit (22) configured for detecting at least one lane of the road (R) in the image data and extracting lane parameters and for correlating the extracted lane parameters with the DTM to obtain a three-dimensional model of the road (R) and/or three-dimensional location coordinates of the vehicle (V).

11. The data processing system (1) according to claim 10, wherein:
the IMU/GPS unit (12) is configured for further providing heading information about a current heading of the vehicle (V); and
the lane detection unit (22) is further configured for correlating the extracted lane parameters with the DTM based on the heading information.

12. The data processing system (1) according to claim 10 or 11, further comprising:
a LiDAR unit (13) for acquiring LiDAR data comprising three-dimensional terrain information, wherein
the lane detection unit (22) is configured for fusing the three-dimensional terrain information with the DTM.

13. The data processing system (1) according to at least one of claims 10 to 12, further comprising:
a radar unit (14) configured for acquiring radar data (O_{track}) of at least one object (O) on the road (R) in front of the vehicle (V), the radar data (O_{track}) comprising distance information and azimuth information of the at least one object (O) with respect to the vehicle (V); and
an object detection unit (23) configured for generating three-dimensional position information (Oᵣₑₐₗ) for the at least one object (O) by correlating the radar data of the at least one object (O) with the DTM and/or the three-dimensional model of the road (R).

14. The data processing system (1) according to at least one of claims 10 to 13, wherein the data processing unit (20) is comprised in an Advanced Driver Assistance Systems of the vehicle (V).

15. Vehicle (V) comprising a data processing system (1) according to at least one of claims 10 to 13.
